## Europäisches Patentamt
## European Patent Office
## Office européen des brevets

(11) Veröffentlichungsnummer: **0 298 240 B1**

# EUROPÄISCHE PATENTSCHRIFT

(45) Veröffentlichungstag der Patentschrift: **21.10.92**

(21) Anmeldenummer: **88108395.0**

(22) Anmeldetag: **26.05.88**

Die Akte enthält technische Angaben, die nach dem Eingang der Anmeldung eingereicht wurden und die nicht in dieser Patentschrift enthalten sind.

(51) Int. Cl.⁵: **G01N 25/22**, G01M 15/00, G01N 27/416

(54) **Verfahren und Vorrichtung zum Überwachen des Schadstoffgehaltes von Abgasen bei Brennkraftmaschinen.**

(30) Priorität: **23.06.87 DE 3720684**

(43) Veröffentlichungstag der Anmeldung:
**11.01.89 Patentblatt 89/02**

(45) Bekanntmachung des Hinweises auf die Patenterteilung:
**21.10.92 Patentblatt 92/43**

(84) Benannte Vertragsstaaten:
**AT DE FR GB IT**

(56) Entgegenhaltungen:
**DE-A- 1 598 680**
**DE-A- 2 237 724**
**DE-A- 2 445 444**
**DE-A- 2 938 653**

(73) Patentinhaber: **ROBERT BOSCH GMBH**
**Postfach 30 02 20**
**W-7000 Stuttgart 30(DE)**

(72) Erfinder: **Dinkelacker, Walter, Dipl.-Phys.**
**Innsbrucker Strasse 46**
**W-7000 Stuttgart 61(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Stand der Technik

Die Erfindung geht aus von einem Verfahren zum Überwachen des Schadstoffgehaltes von Abgasen bei Brennkraftmaschinen nach der Gattung des Hauptanspruchs. Es ist schon ein solches Verfahren nach der DE-OS 24 45 444 bekannt, bei dem die Auspuff-Abgase von einem Ottomotor zur Nachverbrennung über einen beheizten Katalysator geführt werden und an einem Meßfühler vorbeistreichen, der als Sauerstoff-Sonde arbeitet. Bei diesem Verfahren wird das zu untersuchende Abgas stromaufwärts vom Katalysator durch Frischluft verdünnt, um somit eine möglichst vollständige Nachoxydation zu erreichen und über die anschließende Messung des Restsauerstoffs die Luftzahl $\lambda$ zu ermitteln, welche ein Maß für das Luft-Brennstoffverhältnis des Gemisches darstellt, mit dem die Brennkammern im Motor gefüllt werden. Von Nachteil bei diesem Verfahren und der zugeordneten Vorrichtung ist, daß einmal der Aufwand für die genau zumessenden Balgpumpen für die Frischluftzuführung relativ groß ist. Da fernerhin das Luft-Brennstoffverhältnisder dem Motor eingegebenen Füllung innerhalb eines geschlossenen System an sich gleich bleibt, kann mit der ermittelten Luftzahl $\lambda$ zwar eine Aussage über die Art der Gemischbildung gemacht werden, jedoch lassen diese Meßwerte keine Aussage über die Verbrennungsgüte der Brennkraftmaschine zu. Auch sind damit bestimmte Motorfehlfunktionen nicht feststellbar.

Ferner ist aus der DE-OS 22 37 724 ein Verfahren und eine Vorrichtung zur Überwachung des Schadstoffgehaltes in Verbrennungsabgasen bekannt, wobei im Bereich eines Katalysators eine Heizeinrichtung vorgesehen ist. Auch hier werden durch Frischluftzufuhr vor dem Katalysator unverbrannte Schadstoffe nachoxydiert, wobei das durch die Nachverbrennung entstehende Temperaturgefälle ermittelt und als Warn- oder Steuergröße verwendet wird. Bei diesem Verfahren zur Überwachung von Schadstoffen und Abgasen werden zwar in zweckmäßiger Weise verschiedene Abgaskomponente wie Kohlenmonoxyd, Kohlenwasserstoffe oder Stickstoffoxyd gleichzeitig erfaßt und berücksichtigt. Der Aufwand für die Frischluftzuführung ist jedoch auch hier beträchtlich. Vor allem aber ergeben diese Meßwerte keinen geeigneten Maßstab her, so daß eine Aussage über die Güte der jeweiligen Verbrennung nicht möglich ist. Insbesondere läßt sich mit diesem Verfahren und der betreffenden Vorrichtung nicht feststellen, wie groß der Abstand des thermochemischen Zustandes der bei der Verbrennung anfallenden Rohabgase vom Zustand des Gleichgewichts ist.

Aufgabe der Erfindung ist es, das Verbrennungs- und Abgasverhalten bei einer Brennkraftmaschine mit möglichst wenig Größen auf einfache Weise vollständig zu erfassen.

Gelöst wird diese Aufgabe ausgehend von dem gattungsbildenden Verfahren durch die kennzeichnenden Merkmale des Anspruchs 1 bzw. bei einer gattungsbildenden Vorrichtung nach Anspruch 6 durch dessen kennzeichnende Merkmale.

Das erfindungsgemäße Verfahren mit den kennzeichnenden Merkmalen des Anspruchs 1 hat den Vorteil, daß es durch eine auch in verschiedenen Betriebszuständen durchführbare Gesamtabgasanalyse eine Überwachung und Diagnose der thermodynamischen Motorfunktion ermöglicht. Dabei kann neben einer Aussage über die Gemischaufbereitung vor allem auch eine Aussage über die Qualität der Verbrennung gemacht werden. Insbesondere kann dabei das chemische Gleichgewicht bei der jeweiligen Abgastemperatur und dem jeweils angebotenen Luft-Kraftstoffgemisch und dem Grad der Verbrennung bestimmt werden, das bedeutet also, daß der Abstand des thermochemischen Zustandes der Rohabgase aus dem Verbrennungsmotor vom Zustand des Gleichgewichts ermittelt werden kann. Mit dem erfindungsgemäßen Verfahren kann somit unter Einbeziehung lediglich zweier Meßgrößen die Verbrennungsgüte des Motors und dessen Abgasverhalten relativ vollständig erfaßt werden; zudem lassen sich auch Motorfehlfunktionen erkennen.

Durch die in den abhängigen Ansprüchen 2 bis 5 aufgeführten Maßnahmen sind vorteilhafte Weiterbildungen und Verbesserungen des im Hauptanspruch angegebenen Verfahrens möglich, wobei es besonders günstig ist gemäß Anspruch 2 und 3 die freien Enthalpiewerte zu berücksichtigen.

Ferner ist es vorteilhaft, zur Durchführung des erfindungsgemäßen Verfahrens Vorrichtungen nach den Ansprüchen 6 bis 9 auszubilden.

Zeichnung

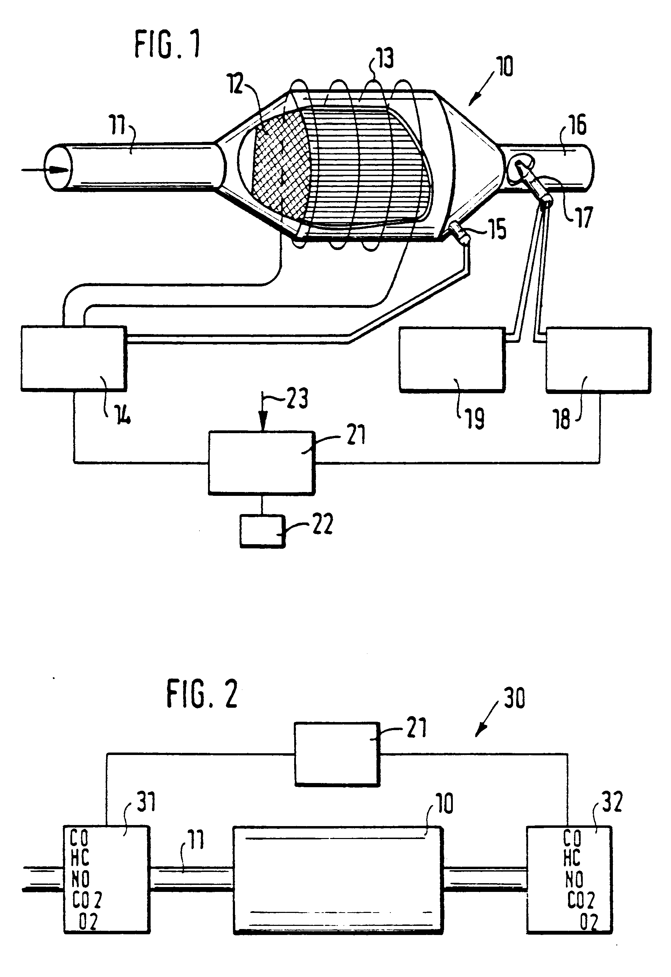

Zwei Ausführungsbeispiele der Erfindung sind in der Zeichnung dargestellt und in der nachfolgenden Beschreibung näher erläutert. Es zeigen Figur 1 ein erstes Ausführungsbeispiel der erfindungsgemäßen Vorrichtung zur Überwachung des Schadstoffgehaltes in von Brennkraftmaschinen kommenden Abgasen in vereinfachter Darstellung und Figur 2 eine zweite Vorrichtung in schematischer Darstellung.

Beschreibung der Ausführungsbeispiele

Die Figur 1 zeigt eine Vorrichtung 10 zum Überwachen des Schadstoffgehaltes von Abgasen bei Brennkraftmaschinen, bei der in ein Abgasrohr 11 ein Katalysator 12 geschaltet ist. Zum Erwärmen des Katalysators 12 ist eine elektrische Heizeinrichtung 13 vorgesehen, die von einer Heizungs-Regeleinrichtung 14 aus betrieben wird. Zu diesem Zweck steht die Heizungs-Regeleinrichtung 14 mit einem Temperaturfühler 15 in Verbindung, der unmittelbar stromabwärts vom Katalysator 12 die Temperaturverhältnisse im Abgasrohr 11 erfaßt.

In einen stromabwärts vom Katalysator 12 liegenden Abschnitt 16 des Abgasrohrs 11 ist ein elektrochemischer Meßfühler 17 geschaltet, welcher in dem vorbeifließenden Abgasstrom als fortlaufend ablesbaren Wert den restlichen freien Sauerstoffgehalt ermittelt und damit eine Aussage über die Luftzahl λ ermöglicht. Der Meßfühler 17 steht zu diesem Zweck mit einer Auswerteschaltung 18 in Verbindung. Ferner ist an den Meßfühler 17 eine Heizungsregelung 19 angeschlossen, mit welcher der Meßfühler im Betrieb auf eine konstante Temperatur geregelt wird. Derartige Meßfühler 17 sind an sich bekannt z.B. aus der DE-OS 21 15 619 und sind auch auf dem Markt als Lambda-Sonde LSM erhältlich.

Die Ausgangssignale der Heizungs-Regeleinrichtung 14 sowie die Ausgangssignale der Auswerteschaltung 18 werden an eine Recheneinheit 21 gegeben, welche die beiden Eingangssignale zueinander in Beziehung setzt und daraus ein Ausgangssignal an eine Anzeigeeinheit 22 weitergibt.

Mit der Vorrichtung 10 wird zur Überwachung und Diagnose der thermodynamischen Funktion der Brennkraftmaschine eine Gesamtverbrennungsanalyse durchgeführt, aus der nicht nur die Gemischaufbereitung sondern auch die Qualität der Verbrennung beurteilt werden kann. Zu diesem Zweck wird das chemische Gleichgewicht bei der jeweiligen Abgastemperatur und dem angebotenen Luft-Kraftstoff-Gemisch und dem Grad der Verbrennung bestimmt, so daß also der Abstand des thermochemischen Zustandes der von der Brennkraftmaschine kommenden Rohabgase vom Zustand des Gleichgewichts bestimmt wird.

Zu diesem Zweck wird von dem von der Brennkraftmaschine kommenden Rohabgas ein Teilstrom in das Abgasrohr 11 und weiter über den Katalysator 12 geführt, in dem die unverbrannten Bestandteile des Rohabgases durch Nachverbrennung oxydiert werden und die dabei anfallende Verbrennungsenthalpie $\Delta H_R$ gemessen wird. Zur Messung dient dabei das an sich bekannte Wärmetönungsverfahren, das mit Hilfe der Heizeinrichtung 13, der Heizungs-Regeleinrichtung 14 und dem Temperaturfühler 15 durchführbar ist. Bei diesem Verfahren wird die elektrisch betriebene Heizeinrichtung 13 auf konstante Temperatur bzw. konstanten Widerstand geregelt. Die Heizleistung wird gemessen und bei Durchfluß von Luft als Referenzgröße festgehalten. Bei dem nunmehr durchströmenden Abgas entsteht durch die Nachverbrennung im Katalysator 12 eine zusätzliche Wärmetönung, was bei der Konstantregelung zu einer Verringerung der elektrischen Heizleistung führt. Dabei kann die Aufheizung eine Widerstandsänderung bewirken, welche proportional dem Anteil der brennbaren Bestandteile im Abgas ist. Somit entspricht diese Leistungsminderung der restlichen Wärmeenergie im Abgas, also der Verbrennungs-enthalpie $\Delta H_R$. Der Katalysator 13 wird dabei auf eine konstante Temperatur geregelt, die eine möglichst vollständige Nachverbrennung bis zum Gleichgewicht sicherstellt. Dies kann z.B. vorteilhaft bei 400°C durchgeführt werden. Mit dieser Nachverbrennung wird auch sichergestellt, daß in den Abgasen im Abschnitt 16 eine eindeutige Zuordnung von Sauerstoffkonzentration zur Luftzahl λ herrscht. Dieses Signal für die Wärmetönung beim Nachverbrennen oder auch davon abhängige Signale werden von der Heizungs-Regeleinrichtung 14 an die Recheneinheit 21 gemeldet. Zur Durchführung des Wärmetönungsverfahrens geeignete Schaltungen sind z.B. aus der DE-OS 24 57 650 bekannt.

Im Abschnitt 16 werden die nachverbrannten Abgase an dem Meßfühler 17 vorbeigeführt, wobei der in den Abgasen immer noch vorhandene Restsauerstoff benutzt wird, ein elektrisches Spannungssignal zu erhalten, aus dem in der Auswerteschaltung 18 die Luftzahl λ ermittelt wird, die eine Aussage über das Luft-Kraftstoffgemisch des der Brennkraftmaschine eingegebenen Füllung ermöglicht. Im Betrieb wird der Meßfühler 17 mit Hilfe der Heizungsregelung 19 auf eine Konstanttemperatur von z.B. 400°C geregelt, so daß die Temperaturkonstanz in engem Bereich eine sehr gute Reproduzierbarkeit der Lambda-Sonden-Kennlinie gewährleistet. Mit Hilfe dieser Luftzahl λ wird nun die Gesamtenthalpie $\Delta H_G$ der Verbrennung in der Brennkraftmaschine bis zum Gleichgewicht bei Abgastemperatur gerechnet, was in der Recheneinheit 21 geschehen kann. Ferner werden der Recheneinheit 21 am Eingang 23 Werte eingegeben, welche bei der Ermittlung der Entropieänderung vom Rohabgas bis zum Zustand des Gleichgewichts benützt werden, um die in den einzelnen Abgaskomponen-ten enthaltenen freien Enthalpien $\Delta G$ zu berück-sichtigen. Aus dem Zusammenhang

$$\Delta S = \frac{\Delta H - \Delta G}{T}$$

läßt sich mit Hilfe der Recheneinheit 21 die Entro-pieänderung $\Delta S$ des Rohabgases zum Abgas im chemischen Gleichgewicht ermitteln, wobei die Enthalpie $\Delta H$ aus der Wärmeenthalpie $\Delta H_R$ beim Nachverbrennen der Rohabgase und der rechnerisch ermittelten Gesamtenthalpie der Verbrennung $\Delta H_G$ herleitbar ist. Die freie Enthalpie $\Delta G$ läßt sich aus der freien Enthalpie der Gesamtverbrennung $\Delta G_G$ in Verbindung mit der freien Enthalpie des Rohabgases $\Delta G_R$ ermitteln, wobei die Werte für $\Delta G_G$ aus an sich bekannten Tabellen entnehmbar sind und die Werte für die freie Enthalpie des Rohabgases näherungsweise aus Erfahrungswerten bestimmbar ist. Die Bestimmung des Abstandes der Rohabgase vom chemischen Gleichgewicht durch Messung der Verbrennungsenthalpie $\Delta H_R$ läßt sich mit relativ wenig Aufwand, genau und auch schnell durchführen.

Ferner wird in der Recheneinheit 21, die als Mikroprozessor mit zugeordneten Speichern ausgebildet sein kann, die Entropieänderung des Rohabgases $\Delta S$ in ein Verhältnis gesetzt zu der Entropieänderung, welche das Luftkraftstoff-Gemisch bei der Verbrennung in der Brennkraftmaschine insgesamt erleidet, so ergibt sich aus diesem Quotienten ein Maß für die Verbrennungsgüte des Motors, welche auf die Luftzahl $\lambda$ bezogen ist. Mit dieser Größe, die an der Anzeigeeinheit 22 ebenfalls zur Anzeige gebracht werden kann, ist ein zusätzliches Mittel zur Diagnostizierung von Motorfehlfunktionen gegeben. Dieser Quotient aus den erwähnten Entropieänderungen läßt sich aus dem Zusammenhang

$$\frac{\Delta H_R - \Delta G_R}{\Delta H_G - \Delta G_G}$$

ermitteln, wobei diese Werte aus dem Wärmetönungsverfahren und der Lambda-Sondenmessung zur Verfügung stehen bzw. die freien Enthalpien der Fachwelt bekannt sind. Es kann somit der Zustand des Motors bezüglich seines Verbrennungs- und Abgasverhaltens mit nur zwei Größen vollständig erfaßt werden.

Mit zusätzlicher Erfassung der Abgasmenge ermöglicht die Bestimmung dieser thermodynamischen Größen in Verbindung mit dem ermittelten Lambda die Bestimmung des Krafstoffverbrauchs der Brennkraftmaschine.

Die Figur 2 zeigt als zweite Ausführungsform eine Vorrichtung 30, bei welcher der Vorrichtung 10 nach Figur 1 in die Abgasleitung 11 jeweils ein zusätzliches Meßgerät 31 stromaufwärts bzw. 32 stromabwärts vor- bzw. nachgeschaltet ist, mit denen die verschiedenen Abgaskomponenten wie Kohlenmonoxyd, Kohlenwasserstoff, Stickoxyd, Kohlendioxyd oder Sauerstoff einzeln meßbar sind. In der Recheneinheit 21 werden die Meßwerte beider Meßgeräte 31 und 32 miteinander verglichen, wobei deren Quotient einen Konvertierungsgrad $K_M$

für den in die Meßvorrichtung 30 eingebauten Katalysator 12 ergibt. Ist die Vorrichtung 30 einem in einem Fahrzeug eingebauten Katalysator nachgeschaltet, so kann auch dessen Konvertierungsgrad $K_F$ ermittelt werden, da hierfür der Zusammenhang gilt, daß $K_F = 1 - K_M$ gilt. Dieser Konvertierungsgrad kann natürlich auch für alle einzelnen Komponenten ermittelt werden.

Selbstverständlich sind an dem gezeigten Verfahren und der zugehörigen Vorrichtung Änderungen möglich, ohne vom Gedanken der Erfindung abzuweichen. Obwohl der Katalysator besonders vorteilhaft ist, kann das Verfahren sowie die zugehörige Vorrichtung auch mit einem thermischen Konvertor betrieben werden, der jedoch höhere Betriebstemperaturen erfordert.

**Patentansprüche**

1. Verfahren zum Überwachen des Schadstoffgehaltes von Abgasen bei Brennkraftmaschinen, insbesondere Ottomotoren, bei dem die Abgase über eine eine Heizeinrichtung (13) aufweisende Einrichtung zur Reaktionsbeschleunigung der Verbrennung, insbesondere Katalysator (12) geführt werden und dabei durch Nachverbrennung eine zusätzliche Oxydation erfahren, wonach sie über einen elektrochemischen Meßfühler (17) zur Feststellung des Sauerstoffgehalts geleitet werden, dadurch gekennzeichnet, daß die bei der Nachverbrennung anfallende Wärmemenge nach einem Wärmetönungsverfahren ermittelt und durch Vergleich mit einer aus den Meßwerten des Meßfühlers (17) herleitbaren Gesamtentropieänderung, welche das Brennstoff-Luft-Gemisch bei der Verbrennung insgesamt erfährt, zur Diagnose der thermodynamischen Funktion der Brennkraftmaschine herangezogen wird.

2. Verfahren nach Anspruch 1, dadurch gekennzeichnet, daß bei der Ermittlung der Gesamtentropieänderung der Verbrennung bis zum Gleichgewicht bei Abgastemperatur abhängig von den Meßwerten des Meßfühlers (17) die freie Enthalpie der Gesamtverbrennung berücksichtigt wird.

3. Verfahren nach Anspruch 1 oder 2, dadurch gekennzeichnet, daß bei der Ermittlung des Wärmeinhalts nach dem Wärmetönungsverfahrens die freie Enthalpie des Rohabgases berücksichtigt wird.

4. Verfahren nach einem der Ansprüche 1 bis 3, dadurch gekennzeichnet, daß der Meßfühler (17) mit Hilfe einer Heizungs-Regeleinrichtung (14) auf eine konstante Temperatur geregelt wird.

5. Verfahren nach einem oder mehreren der Ansprüche 1 bis 4, dadurch gekennzeichnet, daß ein die Verbrennungsgüte der Brennkraftmaschine beurteilender Quotient aus der Entropieänderung, welche das Rohabgas erfährt, und der Entropieänderung, welche das Kraftstoff-Luft-Gemisch bei der Verbrennung insgesamt erleidet, gebildet wird.

6. Vorrichtung zum Überwachen des Schadstoffgehaltes von Abgasen bei Brennkraftmaschinen mit einer Einrichtung zum Oxydieren der unverbrannten CO- und HC-Bestandteile im Rohabgas in Gegenwart einer mit einer Heizeinrichtung (13) ausgestatteten Einrichtung zur Reaktionsbeschleunigung der Verbrennung, insbesondere Katalysator (12) und mit einem diesem nachgeschalteten elektrochemischen Meßfühler (17) zur Feststellung des restlichen Sauerstoffgehalts, dadurch gekennzeichnet, daß die Heizeinrichtung (13) mit einer zur Durchführung des Wärmetönungsverfahrens geeigneten Heizungs-Regeleinrichtung (14) verbunden ist, die mit einem Temperatursensor (15) in Wirkverbindung steht, der stromabwärts der Einrichtung zur Reaktionsbeschleunigung der Verbrennung (12) in den Abgasstrom geschaltet ist und daß eine Recheneinheit (21) vorgesehen ist, in welcher von den Signalen der Wärmetönung (14) und des Meßfühlers (17) abhängige Werte miteinander in Vergleich gebracht werden.

7. Vorrichtung nach Anspruch 6, dadurch gekennzeichnet, daß der Meßfühler (17) mit einer Heizungs-Regelung (19) für konstante Temperaturen verbunden ist und eine temperaturunabhängige, reproduzierbare Kennlinie aufweist.

8. Vorrichtung nach Anspruch 6 oder 7, dadurch gekennzeichnet, daß die Recheneinheit (21) als Ausgangssignal einen Quotienten bildet, bei dem die Wärmetönung beim Nachverbrennen vermindert um die freie Enthalpie des Rohabgases zur Gesamtentropieänderung der Verbrennung ins Verhältnis gesetzt wird.

9. Vorrichtung nach einem der Ansprüche 6 bis 8, dadurch gekennzeichnet, daß stromaufwärts vom Katalysator (12) und stromabwärts des Meßfühlers (17) in den Abgasstrom zusätzliche, einzelne Abgaskomponenten erfassende Meßgeräte (31, 32) geschaltet sind, deren Ausgangssignale miteinander verglichen werden und eine Aussage über den Konvertierungsgrad (K) des Katalysators (12) ermöglichen.

**Claims**

1. Method for monitoring the pollutant content of exhaust gases from internal combustion engines, in particular Otto engines, in which the exhaust gases are passed via a device which has a heating device (13) and is intended to accelerate the combustion reaction, in particular a catalyst (12), and in the process undergo an additional oxidation by afterburning, whereupon they are passed via an electrochemical detector (17) to determine the oxygen content, characterised in that the quantity of heat arising during the afterburning is established by a heat of reaction method and used to diagnose the thermodynamic functioning of the internal combustion engine by comparison with a total entropy change which the fuel/air mixture undergoes overall during combustion, the said change being derivable from the measured values of the detector (17).

2. Method according to Claim 1, characterised in that the free enthalpy of the total combustion is allowed for, when establishing the total entropy change of combustion required to reach equilibrium at the exhaust gas temperature, as a function of the measured values of the detector (17).

3. Method according to Claim 1 or 2, characterised in that the free enthalpy of the untreated exhaust gas is allowed for when establishing the heat content by the heat of reaction method.

4. Method according to one of Claims 1 to 3, characterised in that the detector (17) is regulated to a constant temperature with the aid of a heating regulation device (14).

5. Method according to one or more of Claims 1 to 4, characterised in that a quotient of the entropy change which the untreated exhaust gas undergoes and of the entropy change which the fuel/air mixture undergoes overall during combustion is formed, the said quotient measuring the quality of combustion of the internal combustion engine.

6. Apparatus for monitoring the pollutant content of exhaust gases from internal combustion engines, having a device for oxidising the unburnt CO and HC constituents in the untreated exhaust gas in the presence of a device, equipped with a heating device (13), for accelerating the combustion reaction, in particular a catalyst (12), and having an electrochemical detector (17), inserted after the latter, for determining the residual oxygen content, characterised in that the heating device (13) is connected to a heating regulation device (14) suitable for carrying out the heat of reaction method, which is in operative connection with a temperature sensor (15) which is inserted into the exhaust gas stream upstream of the device for accelerating the combustion reaction (12), and in that a computing unit (21) is provided in which values dependent on the signals of the heat of reaction (14) and of the detector (17) are compared to one another.

7. Apparatus according to Claim 6, characterised in that the detector (17) is connected to a heating regulator (19) for constant temperatures and has a temperature-independent, reproducible characteristic.

8. Apparatus according to Claim 6 or 7, characterised in that the computing unit (21) forms as its output signal a quotient in which the heat of reaction during afterburning, reduced by the free enthalpy of the untreated exhaust gas, is related to the total entropy change of combustion.

9. Apparatus according to one of Claims 6 to 8, characterised in that inserted into the exhaust gas stream upstream of the catalyst (12) and downstream of the detector (17) are additional measuring instruments (31, 32) which record individual exhaust gas components, the output signals of which are compared to one another and which make possible a statement on the degree (K) of conversion of the catalyst (12).

**Revendications**

1. Procédé pour surveiller la teneur en substances nocives des gaz d'échappement dans des moteurs à combustion interne, notamment des moteurs à allumage commandé, procédé dans lequel les gaz d'échappement passent sur un dispositif comportant un moyen de chauffage (13) pour accélérer la réaction de combustion, notamment un catalyseur (12) et subissent alors une oxydation supplémentaire par post-combustion, après quoi, ils passent sur un capteur de mesure électrochimique (17) pour déterminer la teneur en oxygène, procédé caractérisé en ce que la quantité de chaleur produite lors de la post-combustion est déterminée selon le procédé par chaleur de réaction et ou utilisé pour le diagnostic du fonctionnement thermodynamique du moteur à combustion interne, la quantité de chaleur par comparaison à une modification de l'entropie totale susceptible d'être dérivée des valeurs de mesure du capteur de mesure (17), variation du mélange carburant-air lors de la combustion.

2. Procédé selon la revendication 1, caractérisé en ce que pour la détermination de la modification d'entropie totale de la combustion jusqu'à l'équilibre pour la température des gaz d'échappement en fonction des valeurs de mesure du capteur de mesure (17), l'enthalpie libre de la combustion totale est prise en compte.

3. Procédé selon la revendication 1 ou la revendication 2, caractérisé en ce que lors de la détermination de la quantité de chaleur selon le procédé par chaleur de réaction, l'enthalpie libre des gaz d'échappement est prise en compte.

4. Procédé selon l'une des revendications 1 à 3, caractérisé en ce que le capteur de mesure (17) est réglé à une température constante à l'aide d'un moyen de réglage du chauffage (14).

5. Procédé selon une ou plusieurs des revendications 1 à 4, caractérisé en ce qu'un quotient, évaluant la qualité de combustion du moteur à combustion interne, est formé à partir de la modification de l'entropie, que subissent les gaz d'échappement et de la modification de l'entropie, que subit au total le mélange carburant-air lors de la combustion.

6. Dispositif pour la surveillance de la teneur en substances nocives des gaz d'échappement dans des moteurs à combustion interne, avec un appareillage pour oxyder les parties de CO et de HC non brûlées dans les gaz d'échappement bruts en présence d'un moyen équipé d'un dispositif de chauffage (13) pour accélérer la réaction de la combustion, notamment d'un catalyseur (12), et avec un capteur de mesure électrochimique (17) branché à la suite de ce catalyseur pour déterminer la teneur résiduaire en oxygène, dispositif caractérisé en ce que le dispositif de chauffage (13) est relié à un moyen de réglage du chauffage (14) convenant pour la mise en oeuvre du procédé par chaleur de réaction et qui est en liaison opérationnelle avec un capteur de température (15), qui est branché en aval du catalyseur (12) pour l'accélération de la réaction de combustion dans le courant des gaz d'échappement, et en ce que il est prévu une unité de calcul (21) dans laquelle sont mises en comparaison des valeurs dépendant des signaux par chaleur de réaction (14) et du capteur de mesure (17).

7. Dispositif selon la revendication 6, caractérisé en ce que le capteur de mesure (17) est relié à une régulation de chauffage (19) pour assurer des températures constantes et comporte une courbe caractéristique reproductible, dépendant de la température.

8. Dispositif selon la revendication 6 ou la revendication 7, caractérisé en ce que l'unité de calcul (21) forme en tant que signal de sortie un quotient, dans lequel la chaleur de réaction lors de la post-combustion, diminué de l'enthalpie libre des gaz d'échappement bruts, est mis sous forme de proportion par rapport à la modification totale d'entropie de la combustion.

9. Dispositif selon l'une des revendications 6 à 8, caractérisé en ce qu'en amont du catalyseur (12) et en aval du capteur de mesure (17) dans le courant des gaz d'échappement, sont branchés des appareils de mesure (31, 32) supplémentaires détectant les composants individuels des gaz d'échappement, et dont les signaux de sortie sont comparés entre-eux et permettent de se prononcer sur le degré de conversion (K) du catalyseur (12).

FIG. 1

FIG. 2